Europäisches Patentamt

European Patent Office

Office européen des brevets

(11) Publication number: **0 458 348 A2**

## EUROPEAN PATENT APPLICATION

(21) Application number: 91108439.0

(22) Date of filing: 24.05.91

(51) Int. Cl.5: **B23K 1/20**

(30) Priority: 25.05.90 JP 133956/90

(43) Date of publication of application:
27.11.91 Bulletin 91/48

(84) Designated Contracting States:
DE FR GB

(71) Applicant: **KABUSHIKI KAISHA TOSHIBA**
**72, Horikawa-cho Saiwai-ku**
**Kawasaki-shi Kanagawa-ken(JP)**

(72) Inventor: **Wada, Ichiro, c/o Intellectual**
**Property Div.**
**Kabushiki Kaisha Toshiba, 1-1 Shibaura**
**1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) Method of integrally bonding a plurality of metal members.

(57) Disclosed is a method of integrally bonding a plurality of metal members. The method comprises the step of preparing a metal member (21) and the step of coating a predetermined portion (22) in the surface of the metal member (21) with a bonding aid layer (23), and the step of pouring a molten casting material into a mold (26, 27) disposed to suppound that portion of the metal member which is coated with the bonding aid layer (23). The bonding aid (23) is melted by the molten casting material so as to exert a reduction function and an oxidation preventing function after the reduction to the predetermined coated portion (22) in the surface of the metal member (21), the substance formed by the reduction reaction being moved along the flow of the molten casting material so as to permit an integral bonding between the metal member (21) and the casting (30) without being affected by the substance formed by the reducing reaction.

F I G. 5A

F I G. 5D

EP 0 458 348 A2

Rank Xerox (UK) Business Services

The present invention relates to a method of integrally bonding a plurality of metal members, said method being effective for integrally bonding a metal member and a casting, particularly to a method of integrally bonding a plurality of metal members, in which a reducing function and an oxidation-preventing function are brought about on the surface of the metal member so as to facilitate the integral bonding of the metal member with a casting.

Various techniques are known to the art for bonding a plurality of members. In one of the known techniques, a reactive brazing material for bonding such as a glass brazing material or an alloy brazing material is attached to the butting portion between a ceramic member and a metal member or between two ceramic members. Under this condition, the butting portion is subjected to a heat treatment so as to achieve bonding between the ceramic member and the metal member or between the two ceramic members.

In another known technique, the butting portion between two metal members is coated with a flux, followed by heating the butting portion, with the tip of a silver solder rod applied to the butting portion, so as to achieve melting and bonding of the two metal members. Alternatively, the butting portion is coated with a mixture of a flux powder and a silver powder, followed by the heat treatment so as to achieve a desired bonding of the two metal members.

In each of the conventional techniques described above, the butting portion between two members is fused for achieving a desired bonding, which may be called a static bonding method. However, the static bonding method gives rise to a serious defect. Specifically, a static bonding method is widely employed in, for example, the automobile industry and machining industry. In many cases, a hole is made in the bottom of a bottomed cylindrical casting, followed by inserting a shaft member or a pipe member into the hole. Under this condition, the shaft member or the pipe member is bonded to the casting by means of the static bonding method. What should be noted is that the diameter of the shaft member or the outer diameter of the pipe member may happen to be larger than the diameter of for example a casting having a hole. In such a case, it is necessary to work again the casting and the shaft member or the pipe member in a working factory to permit the shaft member or the pipe member to be engaged with the hole made in the bottom of the bottomed cylindrical casting. On the other hand, where the hole made in the casting is unduly large, compared with the shaft member or the pipe member, it is necessary to thicken the shaft member or the pipe member. In short, the conventional static bonding method necessitates troublesome adjusting operations in the case where the hole made in the casting does not fit the shaft member or the pipe member.

A method which basically differs from the static bonding method is also known to the art. In this method, a mold is disposed to surround one end portion of the shaft member or the pipe member, and a molten casting material is poured into the mold cavity. It follows that the shaft member or the pipe member is perfectly bonded to the casting without positioning or cutting. This method may be called a dynamic bonding method.

The dynamic bonding method can be employed for manufacturing various articles, as exemplified below:

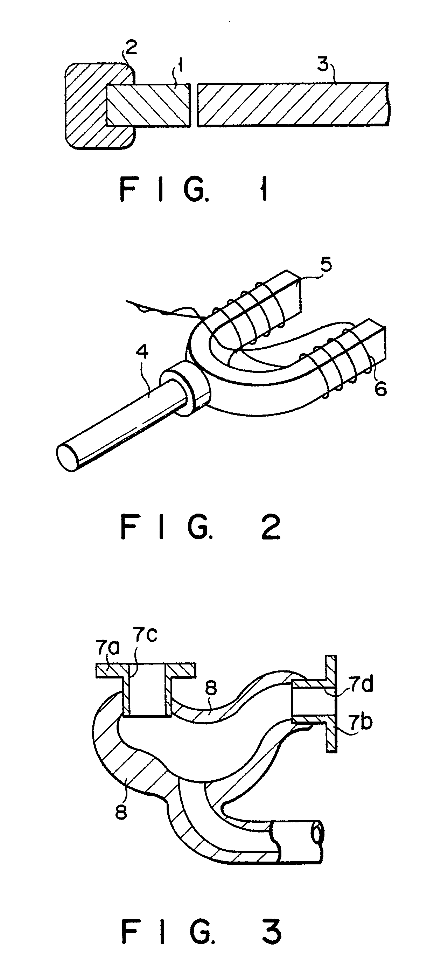

1. As shown in Fig. 1, one end portion of a weldable material 1 is wrapped with an unweldable member 2 (a casting), by the dynamic bonding method, i.e., by the pouring of a casting material into a mold disposed to surround said one end portion of the weldable material 1, followed by welding another weldable material 3 to the other end of the weldable material 1. Of course, the weldable materials 1 and 3 should be equal to each other in diameter. The resultant integral structure thus manufactured can be used in a power transmission mechanism included in, for example, an automobile.

2. After a casting as an unweldable member and a weldable member are integrally bonded each other, an article corresponding to properties of the weldable member can be manufactured. Fig. 2 shows that a weldable material 4, e.g., an Austenite stainless steel which is nonmagnetic, of a predetermined diameter and a predetermined length is bonded at one end to a U-shaped casting 5, which is a magnetic material, by means of the dynamic bonding method. A coil 6 is wound about the U-shaped casting 5. In this case, the resultant integral structure can be used as arms of a robot for collecting, for example, iron pieces.

Fig. 3 shows that two flanges 7a and 7b are disposed in a predetermined positional relationship. Also, a cast iron 8 is bonded by the dynamic bonding method to the end portion of each of these flanges such that holes 7c and 7d of these flanges communicate with each other. The resultant integral body can be used as a manifold of a piping system.

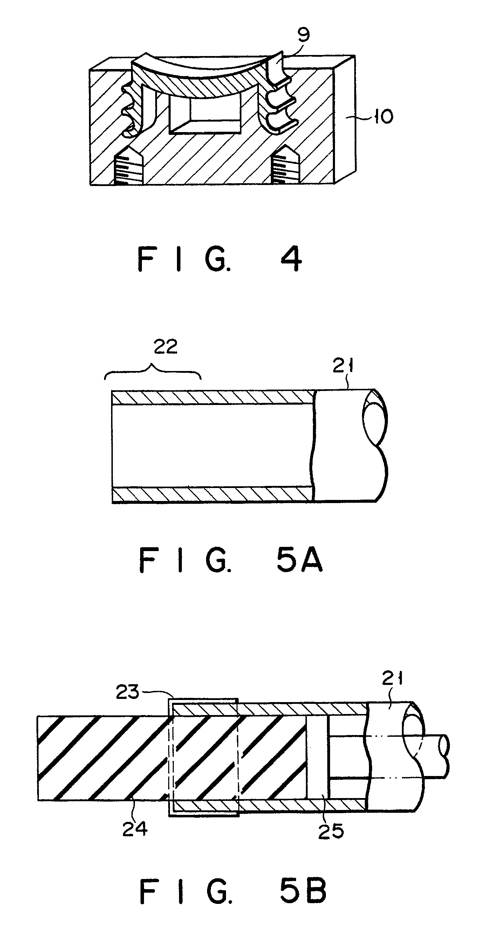

Fig. 4 shows that an iron casting 9 of a predetermined shape, which exhibits a high abrasion resistance and a high thermal conductivity, is bonded by the dynamic bonding method to a bronze cast iron 10 exhibiting a high heat releasing effect. In this case, the resultant integral body can be used as a brake shoe.

However, the following drawbacks accompany the dynamic bonding method in which a molten casting material is poured into a mold surrounding one end portion of a metal member for achieving the bonding between the metal member and a casting.

(1) Suppose a metal member of, for example, SUS 316 stainless steel is bonded by the dynamic bonding method to a ductile cast iron (casting). What should be noted is that a very thin tunica of chromium oxide, i.e., $Cr_2O_3$, is formed on the surface of the metal member. The chromium oxide tunica diminishes the wetting on the surface of the metal member. As a result, the melting of the metal member by the molten casting material is suppressed so as to impair the integral bonding between the metal member and the casting.

(2) In general, the pouring temperature of the molten casting material such as the ductile cast iron is 1400°C. Where the metal member has a heat capacity markedly smaller than that of the casting, the metal member is eutectically melted at about 1400°C. However, the chromium oxide tunica formed on the surface of the metal member has a melting point as high as 2275°C. As a result, a eutectic mixture is not formed between the ductile cast iron and chromium oxide, making it difficult to achieve an integral bonding between the metal member and the ductile cast iron.

In order to overcome the drawbacks noted above, harmful materials such as $Cr_2O_3$ and $Fe_2O_3$ are removed in advance from the surface of the stainless steel member, followed by plating the stainless steel member with, for example, nickel, silver or gold. Thereafter, the plated portion is bonded by the dynamic bonding method to the ductile cast iron (casting). However, the plating metals used in this method such as nickel, silver and gold are costly. In addition, eutectic alloys of these noble metals have a high melting point, with the result that the use of this method is much restricted technically.

What should also be noted is that the fusion temperature is high in the case of bonding between a SUS 316 stainless steel member and a ductile cast iron. In addition, the melting point of the stainless steel is close to the fusion temperature. Thus, it may be possible to improve the fused properly between the casting and the stainless steel member by modifying the dynamic bonding method. However, if the temperature of the molten casting material is simply elevated for improving the fused property noted above, however, the furnace material is severely damaged, leading to a marked economic disadvantage.

A thin iron oxide ($Fe_2O_3$) tunica formed on the surface of SS41, which is a rolled steel used as a general construction material, is also known to exhibit a behavior similar to that described above, which is exhibited by a thin chromium oxide tunica formed on the SUS 316 stainless steel. Further, the melting points of copper, i.e., 1083°C, bronze, i.e., 820 to 935°C, and cast iron are somewhat lower than that of a stainless steel, leaving some allowance in the heat resistance of the melting furnace material. Thus, it is possible to elevate the molten casting material temperature to about 1200 to 1300°C in the dynamic bonding step with a metal member. However, the melt is cooled by the metal member in the dynamic bonding step. Also, oxides such as $Cu_2O$, having a melting point of 1148°C, CuO, having a melting point of 1230°C, ZnO, having a melting point of 1800°C, are formed on the surface of the metal member. What should be noted is that the melting points of these oxides are higher than those of the molten casting material, i.e., 1083°C for copper and 820 to 935°C for bronze. It follows that, since the molten casting material is cooled by the metal member in the dynamic bonding step as noted above, it is difficult to achieve the desired fusion of copper, bronze, cast iron, etc.

The present invention, which has been achieved in view of the situation described above, is intended to provide a method of integrally bonding a metal member with a casting, in which a molten casting material is poured into a mold disposed to surround one end portion of the metal member. The method of the present invention permits the bonding not to be affected by a thin oxide tunica formed on the surface of a metal member, permits preventing the heat capacity of the metal member from being lowered, and also permits omitting the plating of the metal member surface with, for example, a noble metal, said plating being employed in general before the bonding step.

According to an aspect of the present invention, there is provided a method of integrally bonding a plurality of metal members, comprising the step of preparing a metal member, the step of coating a predetermined portion in the surface of the metal member with a bonding aid layer, and the step of pouring a molten casting material into a mold disposed to surround that portion of the metal member which is coated with the bonding aid layer, wherein the bonding aid is melted by the molten casting material so as to exert a reduction function and an oxidation preventing function after the reduction to the predetermined coated portion in the surface of the metal member, the substance formed by the reduction reaction being moved along the flow of the molten casting material so as to permit an integral bonding between the metal member and the casting without being affected by the substance formed by the reducing reaction.

According to another aspect of the present invention, there is provided a method of integrally bonding a plurality of metal members, comprising the step of preparing a metal member, the step of applying a mixture of a binder and a bonding aid including boron to the surface of the metal member (for example in the state of liquid coating), the step of heating the metal member coated with said mixture so as to thermally decompose the binder and to form a bonding aid layer comprising a molten boron oxide ($B_2O_3$) film positioned the surface and an inner molten plating like layer, and the step of supplying a molten casting material into a mold disposed to surround the metal member such that the metal member and the casting are integrally bonded to each other by the function of the molten plating material-like bonding aid.

This invention can be more fully understood from the following detailed description when taken in conjunction with the accompanying drawings, in which:

Figs. 1 to 4 exemplify some applications of the conventional integral bonding method;

Figs. 5A to 5E collectively show how to manufacture a fluid flowing pipe by an integral bonding method according to one embodiment of the present invention;

Fig. 6 shows a power transmission mechanism prepared by process equal to that shown in Figs. 5A to 5E;

Figs. 7 and 8 cover the cases where a metal member and a casting are integrally bonded to each other by diminishing the heat capacity of the metal member; and

Fig. 9 is a graph showing the relationship between the boron content and the melting point of a Ni-B alloy.

In the method of the present invention, a bonding aid layer is formed by, for example, a flame spraying or coating on a predetermined surface region of a metal member. Then, a molten casting material is poured into a mold disposed to cover that portion of the metal member which is coated with the bonding aid layer. As a result, the bonding aid layer permits an integral bonding between the metal member and the casting. The bonding aid used in the present invention is melted by the molten casting material so as to be activated. The activated bonding aid exert a reduction function and an oxidation preventing function after the reduction to the surface of the metal member, and integrally bonds the metal member and the casting with eutectie along bonding by means of function of lowering the melting point of the bonding portion (lowing the melting point by the eutectic function). In this case, the substance formed by the reduction is moved together with the molten casting material, with the result that the integral bonding between the metal member and the casting is not affected at all by the particular substance.

In principle, the materials of the metal member and the casting are not particularly restricted in the method of the present invention. For example, it is possible for the metal member to be formed of steel materials such as a soft steel, a carbon steel and a stainless steel, cast iron, copper and a copper alloy. On the other hand, the casting may be formed of cast iron, copper or a copper alloy.

Also, the materials of the bonding aid are not particularly restricted, though it is necessary for the bonding aid to contain a component R (Reduction) capable of reducing the oxide film formed on the surface of the metal member and a component No (Non-oxidation) capable of preventing oxidation of the reduced metal. In short, the bonding aid should consist of an R-No alone or should contain an R-No. To be more specific, the bonding aid preferably meet the requirements given below:

1. The melting point of the R-No should be lower than the pouring temperature of the molten casting material into a mold.

2. The melting point of the substance formed as a result of the reduction of the oxide film formed on the surface of the metal member should be lower than the pouring temperature of the molten casting material into a mold.

3. The substance should be moved along the flow of the molten casting material.

4. The R-No should be capable of forming a eutectic mixture together with the metal member and the casting material so as to lower the melting points of the metal member and the casting.

In view of the requirements given above, the R-No used in the present invention includes, for example, a Ni-B series metal, a Ag-B series metal, a Au-B series metal, and a Pt-B series metal. These metals can be used singly or in combination. Particularly, the Ni-B series metal is cheaper than the Ag-B series metal, the Au-B series metal, and the Pt-B series metal and, thus, is desirably used in the present invention.

The typical compounds of the Ni-B system metal include $Ni_2B$, $Ni_3B_2$ and NiB. In terms of the melting point, the relationship among these compounds is: $Ni_2B > Ni_3B_2 > NiB$. The melting points of these compounds are distributed within a range of between 990°C and 1230°C. In the actual application of the invented method, the Ni-B system metal is used in the form of a Ni-B system alloy in which $Ni_2B$, $Ni_3B_2$, NiB, etc. are mixed together. Of course, the mixture of this type is included in the Ni-B system metal defined in the present invention.

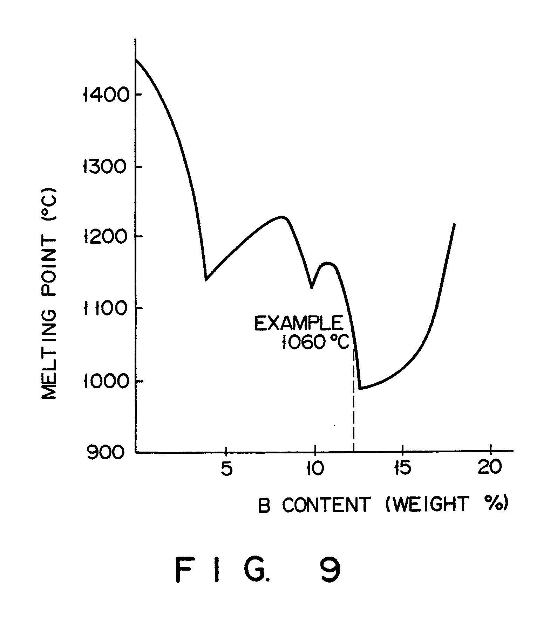

Fig. 9 shows that a Ni-B alloy with a lower melting point can be obtained by suitably selecting the boron content of the alloy. In the embodiments of the present invention, which is presented herein later, used is a Ni-B series bonding aid having a melting point of 1060°C. In view of the affinity of the bonding aid with the metal member, it is desirably in some case to add, for example, a Ag-B series and/or Pt-B series metal to the Ni-B-series bonding aid.

Where the metal member is formed of cast iron or steel materials such as a soft steel, a carbon steel or a stainless steel, with cast iron used as the casting, it is desirable to use a bonding aid containing at least one of the Ni-B series metal, the Ag-B series metal, the Au-B series metal and the Pt-B series metal. On the other hand, where the metal member is formed of copper, a copper alloy or cast iron, with the casting formed of copper alloy, it is desirable to use a bonding aid containing at least one of the Ag-B series metal and the Au-B series metal.

As described previously, the metal member used in the present invention is formed of steel materials, copper, a copper alloy etc. On the other hand, the casting material used in the present invention includes cast iron, copper, a copper alloy, etc. Suppose a metal member formed of SUS 316 stainless steel is bonded to a cast iron member by the method of the present invention. In the first step, a rust removing treatment, e.g., a sand blasting using sands of 200 meshes, is applied to the bonding region of the metal member. It should be noted that a thin oxide tunica, i.e., a tunica of $Cr_2O_3$ having a melting point of 2275°C, is naturally formed on the surface of the stainless steel member. Thus, a bonding aid layer of a Ni-B system alloy is formed in that region on the surface of the metal member which is bonded to the casting by means of, for example, flame spraying or applying. In the case of employing the flame spraying, a binder need not be contained in the bonding aid. Also, a plasma spraying should be carried out inert gas atmosphere. The flame-sprayed bonding aid layer should be about 0.05 to 0.1 mm thick.

On the other hand, a bonding aid mixed with a binder should be used in the case of applying. To be more specific, a water soluble binder or an oil soluble binder is added to a fine powder of a Ni-B series alloy having a particle size of 5 to 20 μm, and the mixture is kneaded so as to prepare a paste suitable for the applying. The water soluble binder used in the present invention includes, for example, an aqueous solution of polyvinyl alcohol and an aqueous solution of polyvinyl acetate. When it comes to an oil soluble binder, it is desirable to use a solution prepared by dissolving, for example, polyvinyl in a methyl ethyl ketone-based organic solvent. It has been confirmed that, in the case of using a water soluble binder, the coating after the drying is week against a mechanical scratching, but is satisfactory for the integral bonding with a small casting. It has also been confirmed that, in the case of using an oil soluble binder, the coating after the drying has a high mechanical strength and, thus, is suitable for the integral bonding with a large casting.

The metal member having the bonding aid layer of the Ni-B system alloy formed on a predetermined region of the surface is incorporated in a mold such that the bonding aid layer region is positioned within the mold cavity. Under this condition, a molten casting material (ductile cast iron) is poured into the mold cavity at a pouring temperature of, for example, 1400°C. In this step, the bonding aid is activated by the heat of the molten casting material, with the result that the boron contained in the Ni-B series bonding aid reacts with the chromium oxide ($Cr_2O_3$) on the surface of the metal member so as to reduce the chromium oxide. It should be noted that the reduction permits the surface of the metal member (SUS 316 stainless steel) to be protected by nickel. Since the Ni-B system alloy serves to lower the melting point on the surface of the SUS 316 stainless steel member, the wettability is improved on the surface of the metal member. It should also be noted that the Ni-B series alloy is in contact with each of the ductile cast iron and the SUS 316 stainless steel on the surface in the bonding portion of the metal member. As a result, a Ni-B system alloy is formed in each of the contact regions. Also, boron oxide ($B_2O_3$ having a melting point of 294°C) formed as a result of reduction of the chromium oxide is moved along the flow of the molten casting material. Thus, the active region on the surface of the SUS 316 stainless steel member in the integral bonding region is brought into contact with the molten casting material. In this case, the Ni-B system alloy produces an effect of lowering the melting point of the system so as to form a eutectic alloy-like bonding.

Chromium oxide is reduced by the Ni-B system alloy having a melting point of 1060°C, as follows:

$$Cr_2O_3 + 2NiB \rightarrow 2Cr + 2Ni + B_2O_3$$

As apparent from the chemical formula given above, active elemental metals of Cr and Ni are formed after the reducing reaction. The boron oxide formed after the reaction has a melting point of 294°C and, thus, is moved together with the molten casting material. It follows that the active region on the surface of the SUS 316 stainless steel is brought into contact with the molten casting material so as to form a eutectic alloy-like bonding.

It should be noted that, in the step of pouring a molten casting material into a mold cavity under the air atmosphere, the hydrocarbon within the binder reacts with the oxygen within the air in the vicinity of the mold so as to generate CO, $CO_2$, C and $H_2O$, as shown below:

$$f(C,H) + g(O_2) \rightarrow CO, CO_2, C, H_2O$$

Naturally, $f(C,H)$ in the above formula denotes the hydrocarbon, and $g(O_2)$ denotes the oxygen within the air.

In order to minimize the carbon formation, it is necessary to dilute the binder with a solvent so as to diminish the absolute amount of the hydrocarbon $f(C,H)$. It is also necessary to select a binder which permits minimizing the carbon content of the reaction mixture. Incidentally, the binder containing the hydrocarbon $f(C,H)$ is thermally decomposed by the heat of the molten casting material in the pouring step of the melt so as to be scattered while the binder is maintained the surface of the metal member. After the scattering, the bonding aid, which does not contain the binder, performs the reducing function and the oxidation preventing function. In addition, the melting point of the system is lowered.

In another embodiment of the present invention, a metal member is coated with a bonding aid kneaded by using, for example, a binder. In this case, the bonding aid layer is dried and, then, subjected to a heat treatment so as to bring about a chemical reaction between the bonding aid and the metal member on the surface of the metal member. As a result, the bonding aid serves to reduce the metal oxide formed on the surface of the metal member and, after the reduction, prevents the reduced metal from being oxidized again. Under this condition, a molten plating-like layer of the bonding aid is formed to cover a predetermined portion on the surface of the metal member, i.e., the portion positioned within a mold. After formation of the bonding aid layer, a molten casting material is poured into the mold cavity so as to achieve an integral bonding between the metal member and the casting. Where the bonding aid used contains boron, boron oxide ($B_2O_3$) formed in the heating step of the coating floats on the molten plating-like layer. In this case, it is desirable to wipe out the floating boron oxide, followed by pouring a molten casting material into the mold. In this embodiment, the surface of the metal member is activated by the bonding aid. What should also be noted is that the substance formed on the surface of the metal member has a melting point lower than that of the metal member. It follows that it is possible to achieve an integral bonding between the metal member and the casting, even if the metal member has a large thickness and a somewhat large heat capacity.

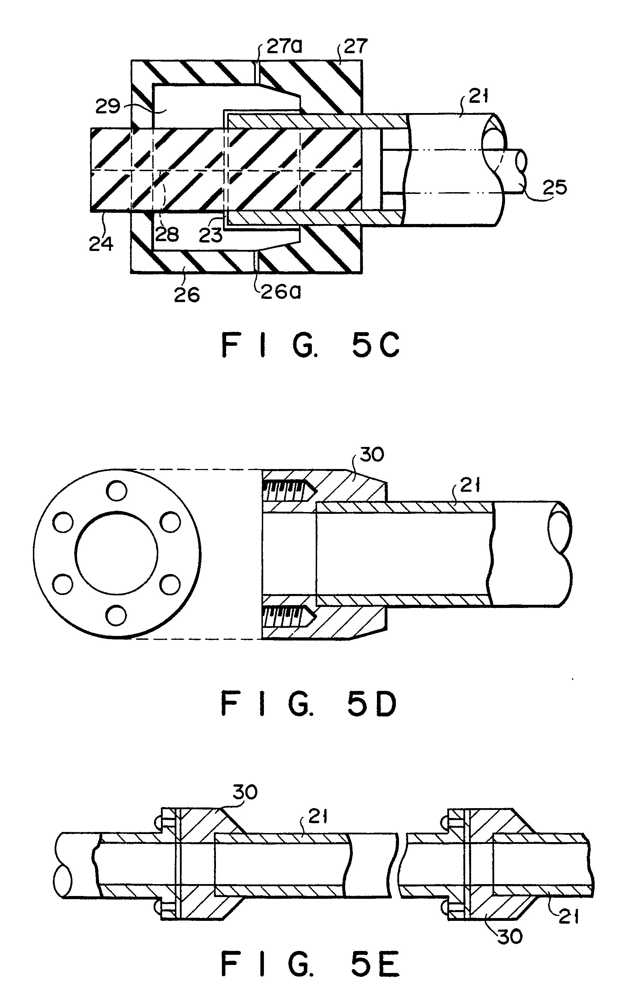

Figs. 5A to 5E collectively exemplify an actual application of the method of the present invention for the manufacture of an integrally bonded article. In this embodiment, the particular technique of the present invention is employed for the manufacture of a fluid transporting pipe for transporting, for example, water or a fuel gas. In the first step, a sand blasting is applied to a bonding portion 22 on the surface of a transporting pipe 21 formed of a carbon steel (SS41) so as to remove the rust, i.e., iron oxide ($Fe_2O_3$), from the surface of the pipe 21 in the portion 22, as shown in Fig. 5A. Even if the rust is removed in this step, iron oxide is formed again in a very small amount before the subsequent step of pouring a molten casting material. After the sand blasting step, a bonding aid layer 23 of a Ni-B system metal is formed as shown in Fig. 5B on the surface of the pipe 21 by means of flame spraying. Alternatively, the bonding aid layer 23 may be formed by means of coating of a paste prepared by kneading a mixture consisting of a fine powder of the Ni-B system metal and a binder. After formation of the bonding aid layer, a core 24 with sand core print is inserted into the pipe 21 from the open end of the pipe 21 in the portion 22. On the other hand, a partition tool 25 is inserted in the opposite side of core 24 into the pipe 21 to reach a predetermined position. The partition tool 25 serves to prevent the sand acting as a solidifying agent of the sand core print from entering the pipe.

In the next step, a lower mold half 26 having a sprue 26a is mounted to cover substantially the lower half of the core 24 and the pipe 21, as shown in Fig. 5C. Likewise, an upper mold half 27 is mounted on the lower mold half 26 in a manner to cover substantially the upper half of the core 24 and the pipe 21. These lower and upper mold halves 26 and 27 are bonded to each other with a small amount of an adhesive used in the joint portion 28 between the lower and upper mold halves. As shown in the drawing, the upper mold half 27 comprises a riser gate 27a formed in the upper part.

After the mold halves 26 and 27 are assembled with the pipe 21 partly positioned within the mold assembly as shown in Fig. 5C, a molten casting material is poured into the mold cavity through the sprue 26a. It should be noted that the solidifying agent within the core 24 and the bonding aid 23 are thermally decomposed by the heat of the melt poured into the mold cavity. The gas generated by the decomposition is released to the outside through the riser gate 27a. The riser gate 27a also serves to reserve an excess melt. To be more specific, in the solidifying step of the poured melt, shrinkage takes place in the casting. However, the excess melt reserved in the riser gate 27a serves to make up for the shortage of the melt accompanying the shrinkage noted above. In this figure, a runner for supplying molten metal to the sprue 26a and a pipe for rising molten metal to riser gate 27a are omitted.

The melt poured into the mold cavity flows along the bonding aid layer 23 so as to be stored in a free space 29 within each of the mold halves 26 and 27. In this step, a chemical reaction of the bonding aid 23 on the surface of the pipe is brought about by the heat of the molten casting material, with the result that a flange 30 is integrally bonded to the tip portion of the pipe 21, as shown in Fig. 5D. Fig. 5E shows a fluid transport pipe prepared by successively connecting a plurality of pipes 21 each of which is integrally bonded to a flange by the integral bonding method of the present invention.

Where the pipe 21 is formed of a stainless steel such as SUS 316 or SUS 304 stainless steel, and the cast flange 30 consists of FCD 45 (ductile casting iron), the pouring temperature of the melt is about $1400^\circ$C in general. Where a very small amount of chromium oxide ($Cr_2O_3$) is formed on the surface of the stainless steel, it is necessary for the stainless steel to be melted by the heat of the molten casting material in a depth greater than the surface region in which the chromium oxide is formed. Otherwise, it is impossible to achieve a satisfactory fusion of the stainless steel and the ductile cast iron, resulting in failure to achieve an integral bonding. Such being the situation, it is important for the melting portion of the stainless steel pipe to have a sufficiently thin wall so as to facilitate the melting caused by the heat of the molten casting material. Where the wall thickness of the stainless steel pipe is large, an additional difficulty is brought about even if a rust of chromium oxide is not formed on the surface of the pipe. Specifically, where the wall thickness of the stainless steel pipe is large, the stainless steel pipe has a large heat capacity. In this case, the melt is cooled by the pipe, making it difficult to achieve a desired fusion between the pipe and the ductile cast iron. It follows that it is necessary to control the thickness of the bonding aid layer in view of the amount of the molten casting material (heat capacity) so as to facilitate the melting of the pipe. It should be noted that, in the case where a rust of chromium oxide is formed on the surface of the stainless steel pipe, i.e., metal member, or where the stainless steel pipe has a large thickness, the wettability is impaired on the surface of the stainless steel pipe. In the case of using a Ni-B system bonding aid having a melting point of $1060^\circ$C, the

rust is reduced such that a metal oxide, which is unlikely to be wetted, is converted into an elemental metal, which is highly wettable. In addition, the elemental nickel serving to prevent oxidation covers the surface of the stainless steel pipe and forms a eutectic alloy together with the stainless steel even at the temperature of about $1060^\circ$C.

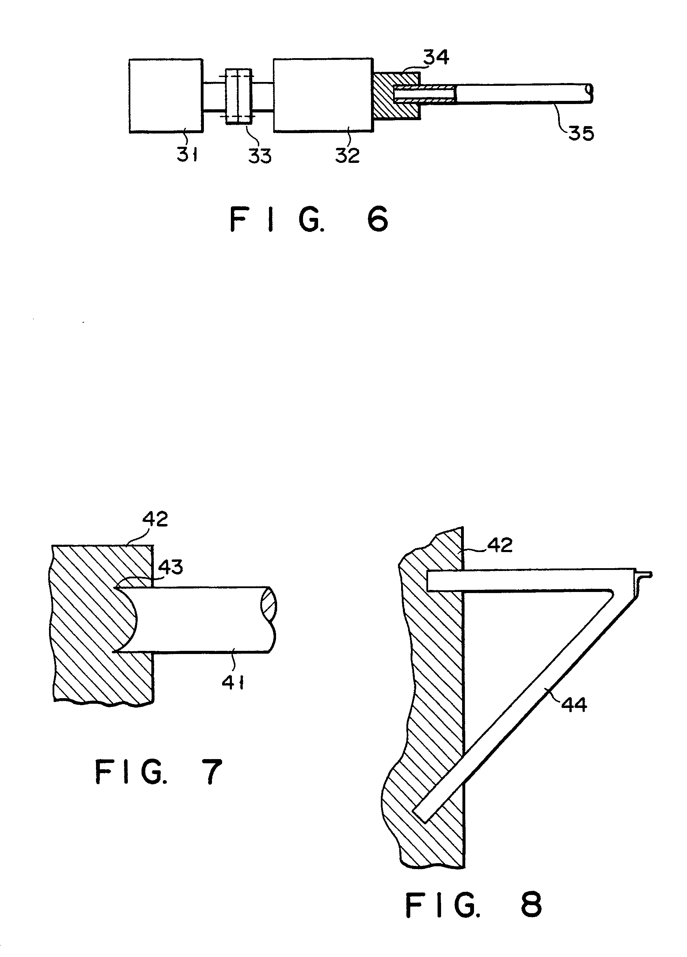

Fig. 6 shows an integral power transmission mechanism manufactured by utilizing the method of the present invention. As shown in the drawing, a motor 31 is connected to a decelerator 32 via a coupler 33. What should be noted is that an output shaft 34, which consists of a casting, of the decelerator 32 is integrally bonded to an SS41 steel pipe 35 of a predetermined length by the integral bonding method of the present invention. Needless to say, the pipe 35 corresponds to the metal member defined in the present invention.

Fig. 7 shows another application of the method of the present invention. In this case, one end portion of a solid metal member 41 is integrally bonded to a casting 42. In this embodiment, the metal member 41 is heated in advance so as to prevent a molten casting material from being cooled in the pouring step into a mold cavity. It is also important to have the end portion of the metal member 41 curved so as to provide a concave structure or a sharp edge portion 43 as shown in the drawing. The particular shape of the metal member permits diminishing the heat capacity of the metal member so as to suppress the cooling of the molten casting material. Particularly, the sharp edge portion 43 facilitates the fusion of the metal member for the integral bonding with the casting.

Fig. 8 shows still another application of the method of the present invention. In this embodiment, an L-shaped angular steel 44, which is markedly smaller in diameter than the solid metal member 41 shown in Fig. 7, is integrally bonded to a casting 42 by the integral bonding method of the present invention. As apparent from Fig. 8, the heat capacity in the bonding portion of the L-shaped angular steel 44 is markedly smaller than that of the metal member 41 shown in Fig. 7. Also, the bonding portion of the angular steel 44 can be readily fused by the heat of the molten casting material like the edge portion 43 of the metal member 41 shown in Fig. 7.

Needless to say, it is possible to employ the integral bonding method of the present invention for manufacturing the bonded articles exemplified as prior art in Figs. 1 to 4.

As described above in detail, the integral bonding method of the present invention comprises the step of selectively coating the surface of a metal member with a bonding aid layer which performs the functions of reducing the metal oxides formed on the surface of the metal member and of preventing the reduced metal from being oxidized again. The metal member selectively coated with the bonding aid layer is incorporated into a mold such that the bonding aid layer is positioned within the mold cavity. Under this condition, a molten casting material is poured into the mold cavity. In this pouring step, the bonding aid is activated by the heat of the melt, with the result that the rust, i.e., metal oxides formed on the surface of the metal member, is reduced. Also, the reduced surface is protected by the component contained in the bonding aid. Further, the melting point is lowered on the surface of the metal member. What should also be noted is that the product accompanying the reducing reaction is moved by the flow of the molten casting material. As a result, an eutectic alloy-like bonding is formed in the contact region between the surface of the metal member and the casting so as to achieve an integral bonding between the metal member and the casting.

Needless to say, the integrally bonded articles manufactured by employing the method of the present invention are not restricted to those exemplied in the accompanying drawings. In other words, it is possible to manufacture various other articles integrally bonded by the method of the present invention.

## Claims

1. A method of integrally bonding a plurality of metal members, comprising the steps of:
   preparing a metal member (21);
   coating a predetermined portion (22) in the surface of the metal member (21) with a bonding aid layer (23); and
   pouring a molten casting material (30) into a mold (26, 27) disposed to surround that portion of the metal member (21) which is coated with the bonding aid layer (23);
   characterized in that the bonding aid (23) is melted by the molten casting material so as to exert a reduction function and an oxidation preventing function after the reduction to the predetermined coated portion (22) in the surface of the metal member (21), the substance formed by the reduction reaction being moved along the flow of the molten casting material so as to permit an integral bonding between the metal member (21) and the casting (30) without being affected by the substance formed by the reducing reaction.

2. The method according to claim 1, characterized in that said metal member (23) is formed of a material selected from the group consisting of a steel material, cast iron, copper and a copper alloy.

3. The method according to claim 1, characterized in that said casting (30) is formed of a material selected from the group consisting of cast iron, copper and a copper alloy.

4. The method according to claim 1, characterized in that said bonding aid (23) contains at least one material selected from the group consisting of a Ni-B series metal, a Ag-B series metal, a Au-B series metal and a Pt-B series metal.

5. The method according to claim 4, characterized in that boron oxide $(B_2O_3)$ is formed as a result of the reduction.

6. The method according to claim 1, characterized in that said bonding aid (23) contains at least one material selected from the group consisting of a Ni-B system metal, a Ag-B system metal, a Au-B system metal and a Pt-B system metal in the case where the metal member (21) is formed of a steel material or cast iron and the casting (30) is formed of cast iron.

7. The method according to claim 1, characterized in that said bonding aid (23) contains at least one material selected from the group consisting of a Ag-B series metal and a Au-B series metal in the case where the metal member (21) is formed of copper, a copper alloy, a steel material or cast iron and the casting (30) is formed of copper or a copper alloy.

8. A method of integrally bonding a plurality of metal members, comprising the steps of:
   preparing a metal member;
   applying a mixture of a binder and a bonding aid including boron to the surface of the metal member;
   heating the metal member coated with said mixture so as to thermally decompose the binder and to form a bonding aid layer comprising a molten boron oxide $(B_2O_3)$ film positioned the surface and an inner molten plating-like layer; and
   supplying a molten casting material into a mold disposed to surround the metal member such that the metal member and the casting are integrally bonded to each other by the function of the molten plating material-like bonding aid.

9. The method according to claim 8, characterized by further comprising the step of wiping off the boron oxide in a molten state, which is formed on the surface of the bonding aid layer, before the step of pouring a molten casting material into the mold.

FIG. 1

FIG. 2

FIG. 3

F I G. 4

F I G. 5A

F I G. 5B

F I G. 5C

F I G. 5D

F I G. 5E

FIG. 6

FIG. 7

FIG. 8

F I G.　9